# EUROPÄISCHE PATENTSCHRIFT

(11) **EP 1 553 062 B1**
(45) Veröffentlichungstag und Bekanntmachung des Hinweises auf die Patenterteilung: **30.05.2018**
(21) Anmeldenummer: 04027206.4
(22) Anmeldetag: 16.11.2004
(51) Int. Cl.: C03C 17/36

(54) **Mit einer Wärmeschutzschicht beschichtetes Substrat**
Substrate coated with a thermal insulation layer
Substrat revetu d une couche d isolation thermique

(30) Priorität: 12.01.2004 DE 102004001655
(43) Veröffentlichungstag der Anmeldung: 13.07.2005
(73) Patentinhaber: INTERPANE Entwicklungs-und Beratungsgesellschaft mbH, 37697 Lauenförde (DE)
(72) Erfinder: Herlitze, Lothar, Dr., 37691 Derental (DE); Schmitt, Michael, 94227 Zwiesel (DE); Landgraf, Ralf, 94469 Deggendorf (DE); Böwer, Reimund, 37688 Beverungen (DE)
(74) Vertreter: Körfer, Thomas

(56) Entgegenhaltungen:
- DE-A1- 2 854 213
- DE-A1- 10 252 101
- DE-A1- 19 520 843
- DE-A1- 19 850 023
- DE-C1- 19 858 227
- US-A- 5 834 103
- US-A- 5 837 361
- US-A1- 2003 165 694

## Beschreibung

Die Erfindung betrifft ein mit einer Wärmeschutzschicht beschichtetes Substrat.

Die Bedeutung von Wärmeschutzschichten hat in den letzten Jahren erheblich zugenommen. Dies liegt an der Verteuerung der Energie und damit an dem unmittelbaren Erfordernis einer verbesserten Isolierung auch der verglasten Flächen von Gebäuden. Um eine Verbesserung der Isolierung zu erreichen, wird auf einem gläsernen Substrat eine metallische Reflexionsschicht zum Reflektieren von Infrarotstrahlung aufgebracht. Diese metallische Schicht sorgt jedoch auch im sichtbaren Wellenlängenbereich für eine erhebliche Reflexion, weswegen sowohl zwischen dem Substrat und der Reflexionsschicht als auch auf der metallischen Schicht Antireflexschichten aufgetragen werden, um eine Selektivität des Schichtsystems zu erreichen. Im Idealfall entstünde so eine vollkommene Reflexion im Infraroten und eine ungehinderte Transmission im sichtbaren Bereich des Lichts.

Solch ein Schichtsystem für Isolierverglasung ist z. B. aus der EP 1 147 066 B1 bekannt. Dabei ist in der Oberschicht als Abschluss des Schichtsystems zur Atmosphäre hin eine Lage Aluminiumnitrid aufgebracht. Diese abschließende Lage Aluminiumnitrid schützt den darunterliegenden Schichtstapel vor Umwelteinflüssen aufgrund der guten Eigenschaften von Aluminiumnitrid hinsichtlich der Säurebeständigkeit sowie der Korrosionsbeständigkeit, insbesondere bei der Weiterverarbeitung des beschichteten Substrats.

Die US 2003/0165694 A1 beschreibt transparente low-E Schichtsysteme, die für Temperingprozesse geeignet sind. Angelagert an eine im Infraroten reflektierende Metallschicht ist eine Schutzschicht aus Titan. Allerdings kann eine derartige Schutzschicht nach einem Tempern zu Farbveränderungen führen. Deshalb wird vorgeschlagen, statt einer reinen Ti-Schicht eine Schicht mit Nb und Ti vorzusehen.

Um eine ausreichende Selektivität des Schichtsystems zu gewährleisten, wird an Stelle einer einzelnen Metallschicht als Infrarotreflektor ein System mit zwei solcher metallischen Schichten aufgebaut, die durch eine dazwischen angeordnete dielektrische Schicht voneinander getrennt sind. Für sämtliche dielektrischen Schichten, also sowohl der unmittelbar auf dem Substrat aufgebrachten Unterschicht, wie auch der zwischen den infrarotreflektierenden Metallschichten aufgetragenen Zwischenschicht und zuletzt in der abschließend aufgebrachten Oberschicht wird dabei eine Aluminiumverbindung, vorzugsweise Aluminiumnitrid, verwendet, so dass eine hohe Symmetrie des Schichtaufbaus erreicht wird.

Dabei ist die aus der Symmetrie resultierende Verwendung der Lage Aluminiumnitrid unmittelbar angrenzend an das Substrat problematisch, da in Verbindung mit der abschließend aufgebrachten Aluminiumnitrid-Lage eine Farbneutralität des gesamten Schichtsystems nicht erreicht wird. Speziell bei großflächig verglasten Gebäuden wird durch die damit verursachte Farbanmutung das ästhetische Empfinden des Betrachters unter Umständen gestört.

Es ist daher die Aufgabe der Erfindung, ein mit einer Wärmeschutzschicht beschichtetes Substrat zu schaffen, welches trotz der Verwendung einer sehr gut säureresistenten und korrosionsbeständigen abschließenden Lage hinsichtlich der Farbneutralität verbessert ist.

Die Aufgabe wird durch das mit einer erfindungsgemäßen Wärmeschutzschicht beschichtete Substrat mit den Merkmalen des Anspruchs 1 gelöst. Die in den Unteransprüchen aufgeführten Maßnahmen betreffen vorteilhafte Weiterbildungen der erfindungsgemäßen Wärmeschutzschicht.

Das mit einer Wärmeschutzschicht beschichtete Substrat umfasst eine metallische Schicht, die zwischen einer dielektrischen Unterschicht und einer dielektrischen Oberschicht angeordnet ist. Zum Schutz des gesamten Schichtstapels ist in der dielektrischen oberschicht zumindest eine Lage aus einem Nitrid oder Oxynitrid eines der Elemente Al (Aluminium), Si (Silizium) oder Zr (Zirkonium) angeordnet. Diese Lage weist eine besonders gute Säurebeständigkeit und Korrosionsbeständigkeit auf, und kann damit die darunter liegenden angeordneten Lagen sowohl der Oberschicht als auch der Unterschicht bzw. der metallischen Schicht wirkungsvoll schützen.

Um eine besonders gute Farbneutralität zu erreichen, wird unterhalb der metallischen Schicht in der dielektrischen Unterschicht zumindest eine Lage vorgesehen, die aus einem Oxid oder Nitrid eines der Elemente Bi (Wismut), W (Wolfram) oder Ti (Titan) besteht. Die Verwendung eines solchen Oxids oder Nitrids ergibt eine sehr gute Farbneutralität, insbesondere bei der Verwendung von Bi_{y}Oₓ, da dadurch eine Lage mit einem gegenüber den Lagen der Oberschicht erhöhten Brechungsindex auf Seiten des Substrats aufgebracht ist. Dadurch lässt sich in Verbindung mit der niedriger brechenden Lage eines Nitrids oder Oxynitrids der Oberschicht als Abschluss des Schichtaufbaus eine besonders gute Farbneutralität erreichen, ohne auf die Vorteile des Nitrids bzw. Oxynitrids von Al, Si oder Zr als Schutzschicht verzichten zu müssen.

Insbesondere ist es vorteilhaft, in der Unterschicht unmittelbar auf dem Substrat eine Lage aus Bi_{y}Oₓ aufzubringen und den gesamten Schichtstapel mit einer Lage Aluminiumnitrid abzuschließen. Besonders gute optische Eigenschaften, insbesondere hinsichtlich der Farbneutralität, ergeben sich dabei, wenn die Dicke der Lage Bi_{y}Oₓ 10 nm bis 40 nm, bevorzugt 15 nm bis 30 nm, weiter bevorzugt 17 nm bis 25 nm und besonders bevorzugt 20 nm beträgt. Dies gilt insbesondere dann, wenn gleichzeitig die Lage Aluminiumnitrid der Oberschicht eine Dicke von 5 nm bis 70 nm, bevorzugt 6 nm bis 30 nm, weiter bevorzugt 6 nm bis 15 nm und besonders bevorzugt 8 nm aufweist.

Alle bezeichneten Oxide, Oxynitride und Nitride können von ihren idealen stöchiometrischen Verhältnissen abweichen, wobei die Abweichungen zum Erreichen von bestimmten optischen Eigenschaften gezielt einstellbar sind. Insbesondere ist es vorteilhaft, gerade das stöchiometrische Verhältnis x/y von Bi_{y}Oₓ abweichend von dem idealen stöchiometrischen Verhältnis zu wählen, da dann eine besonders gute Farbneutralität des Schichtsystems erreicht wird.

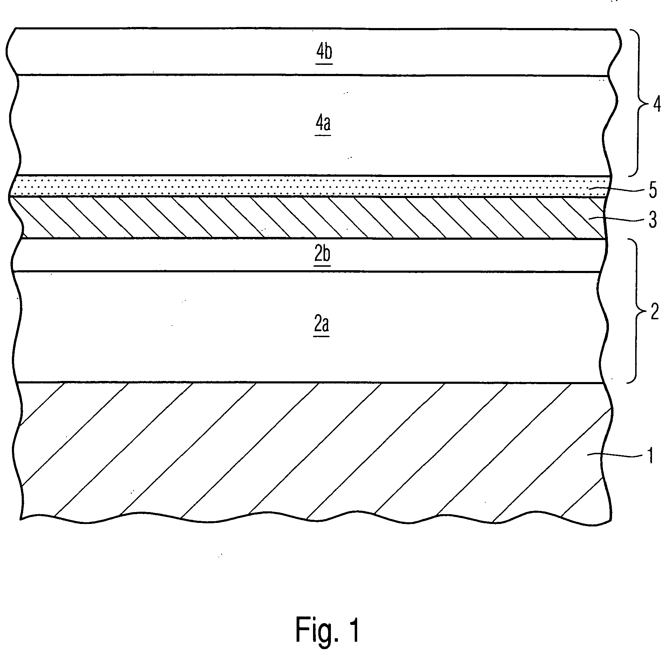

Ein Ausführungsbeispiel eines mit einer erfindungsgemäßen Wärmeschutzschicht beschichteten Substrats ist in der Fig. 1 dargestellt und wird in der nachfolgenden Beschreibung näher erläutert. Es zeigt:
- Fig. 1: ein mit einer erfindungsgemäßen Wärmeschutzschicht beschichtetes Substrat.

Das Schichtsystem der Wärmeschutzschicht ist auf einem Substrat 1 aufgebracht, wobei als Substrat 1 vorzugsweise transparentes Floatglas verwendet wird. Auf einer Oberfläche des Substrats 1 ist zunächst eine dielektrische Unterschicht 2 aufgebracht, wobei diese dielektrische Unterschicht 2 vorzugsweise aus einer ersten Lage 2a und einer zweiten Lage 2b besteht.

Bei der nachfolgenden Beschreibung sämtlicher Lagen sind die verwendeten Materialien als wesentliche Bestandteile der Lagen zu verstehen. Darüber hinaus können Zusätze zulegiert werden, oder Verunreinigungen aus dem Produktionsprozess in der Lage vorhanden sein.

Als erste Lage 2a wird auf dem Substrat 1 zunächst ein Oxid oder Nitrid eines der Elemente Bi, W oder Ti aufgebracht. Die Schichtdicke dieser erste Lage 2a liegt dabei in einem Bereich von 10 nm bis 40 nm, bevorzugt 15 nm bis 30 nm, weiter bevorzugt 17 nm bis 25nm. In einer besonders bevorzugten Ausführungsform ist die erste Lage 2a 20 nm dick.

Zusätzlich zu dieser ersten Lage 2a weist die dielektrische Unterschicht 2 eine zweite Lage 2b auf, die vorzugsweise aus Zinkoxid besteht und eine Dicke von 1 nm bis 15 nm, bevorzugt von 2 nm bis 8 nm, weiter bevorzugt von 2,5 nm bis 5 nm hat. Besonders bevorzugt ist eine Dicke von 3 nm für die zweite Lage 2b der Unterschicht 2. An Stelle des Zinkoxids kann in der zweite Lage 2b auch ein Zinkoxynitrid, Zinkstannat oder Zinnoxid aufgebracht werden.

Nach dem Aufbringen der dielektrischen Unterschicht 2 wird eine für die eigentliche Reflexion der Infrarotstrahlung verantwortliche Metallschicht 3 aufgebracht. Diese Metallschicht 3 besteht vorzugsweise aus Silber. Ein sinnvoller Bereich für die Dicke der Metallschicht 3 liegt zwischen 7 nm bis 17 nm, bevorzugt 9 nm bis 14 nm, besonders bevorzugt 11 nm. Zur Verbesserung der Wärmeisolierung kann die Dicke der Schicht erhöht werden, sofern die damit verbundene Verschlechterung sonstiger optischer Eigenschaften, wie beispielsweise der Transmission, für den jeweiligen Einsatzzweck akzeptabel bleibt. Während des Auftrags ist zu gewährleisten, dass eine Oxidation des Silbers nicht erfolgt. Dies wird beispielsweise bei einem Sputterprozess durch eine sauerstofffreie Atmosphäre erreicht.

Auf der von dem Substrat 1 abgewandten Seite der Metallschicht 3 wird eine dielektrische Oberschicht 4 aufgebracht, die gemeinsam mit der dielektrischen Unterschicht 2 für die Entspiegelung des Schichtsystems sorgt. In dem dargestellten bevorzugten Ausführungsbeispiel der Fig. 1 besteht die Oberschicht 4 wie die dielektrische Unterschicht 2 aus einer ersten Lage 4a und einer zweiten Lage 4b.

Die erste Lage 4a der dielektrischen Oberschicht 4 ist vorzugsweise wiederum eine Lage Zinkoxid, hier mit einer Dicke von 10 nm bis 70 nm. Bevorzugt hat die erste Lage 4a der dielektrischen Oberschicht 4 eine Dicke von 20 nm bis 50 nm, weiter bevorzugt von 30 nm bis 40 nm, besonders bevorzugt von 35 nm. An Stelle von Zinkoxid kann die erste Lage 2a der dielektrischen Oberschicht 4 wiederum im wesentlichen Zinkoxynitrid oder Zinkstannat oder Zinkoxid enthalten.

Die den gesamten Schichtstapel abschließende, zweite Lage 4b der dielektrischen Oberschicht 4 wird vorzugsweise durch eine Lage Aluminiumnitrid gebildet, das zuletzt in einer Dicke von vorzugsweise 5 nm bis 70 nm auf den Schichtstapel aufgetragen wird. Die bevorzugte Dicke der zweiten Lage 4b der dielektrischen Oberschicht 4 beträgt 6 nm bis 30 nm, weiter bevorzugt 6 nm bis 15 nm, besonders bevorzugt 8 nm.

Vor dem Auftragen der dielektrischen Oberschicht 4 kann sowohl zum Verbessern der Haftung der dielektrischen Oberschicht 4 als auch zum Verhindern der Oxidation der Metallschicht 3 eine Haftschicht 5 aufgetragen werden. Hierfür wird vorzugsweise metallisches Titan aufgesputtert, wobei die dazu verwendete sauerstofffreie Inertgas-Atmosphäre verhindert, dass das darunterliegende Silber im Prozess oxidiert wird. Das metallische Titan wirkt damit nicht nur als Haftverbesserer, sondern auch als Blocker. Die Haftschicht 5 hat dabei eine Schichtdicke von 0,5 nm bis 10 nm, bevorzugt 1 nm bis 5 nm, besonders bevorzugt 2 nm.

Als Haftschicht 5 können auch z. B. InSnOₓ (ITO), NiCr oder keramisches Zinkoxid verwendet werden. Das zum Ausbilden der Haftschicht 5 gemäß dem bevorzugten Ausführungsbeispiel aufgetragene Titan wird in dem nachfolgenden Beschichtungsprozess beim Aufbringen der dielektrischen Oberschicht 4, zu dem eine sauerstoffhaltige Atmosphäre erforderlich ist, zumindest teilweise zu TiOₓ oxidiert.

Die Verbesserung der Farbneutralität hängt wesentlich von der ersten Lage 2a der dielektrischen Unterschicht 2 ab. Neben der Variation der Schichtdicke kommt dabei der stöchiometrischen Zusammensetzung des verwendeten Materials der Lage, welche den Brechungsindex beeinflußt, entscheidende Bedeutung zu. Zur Verbesserung der Farbneutralität wird daher gemäß einer bevorzugten Ausführungsform das stöchiometrische Verhältnis der Schicht so eingestellt, dass sich durch die Abstimmung eine optimale Farbneutralität ergibt. Beste Ergebnisse lassen sich bei der Verwendung von Bi_{y}Oₓ als erster Lage 2a der dielektrischen Unterschicht 2 in einer auf die Verwendung von Aluminiumnitrid in der zweiten Lage 4b der dielektrischen Oberschicht 4 abgestimmten stöchiometrischen Zusammensetzung x/y erzielen.

Das Auftragen der einzelnen Schichten bzw. ihrer Lagen erfolgt in bekannter Weise mittels eines Sputterprozesses, zum Beispiel Magnetronsputtern. Zum Erzeugen von Oxiden oder Oxynitriden kann dabei während des Aufbringens der jeweiligen Lage ein Anteil an Sauerstoff in dem Prozessgas enthalten. Es ist aber auch möglich oxidische oder nitridische Keramiktargets zu sputtern. Das Abscheiden der metallischen Silberschicht als Metallschicht 3 erfolgt dagegen in einer inerten Atmosphäre, ebenso wie das Abscheiden der nachfolgenden bevorzugt aufgebrachten Titan-Schicht als Haftschicht 5.

Besonders günstig ist es, die zweite Lage 2b der dielektrischen Unterschicht 2 und die erste Lage 4a der dielektrischen Oberschicht 4 aus demselben Material zu erzeugen, um so die um die Metallschicht 3 angeordneten Lagen der dielektrischen Unter- und Oberschicht 2, 4 hinsichtlich ihres Brechungsindexes symmetrisch auszubilden. Die erste Lage 2a der dielektrischen Unterschicht 2 hat dagegen einen größeren Brechungsindex als die abschließende zweite Lage 4b der dielektrischen Oberschicht 4.

## Patentansprüche

1. Mit einer Wärmeschutzschicht beschichtetes Substrat
mit einer Metallschicht (3),
mit einer dielektrischen Unterschicht (2), die zwischen der Metallschicht (3) und dem Substrat (1) angeordnet ist, wobei die dielektrische Unterschicht (2) eine erste Lage (2a) aufweist, die auf dem Substrat aufgebracht ist, und die aus einem Oxid oder Nitrid oder Oxynitrid zumindest eines Elements aus der Gruppe aus Bi, W, Ti besteht, und
wobei die dielektrische Unterschicht (2) eine zweite Lage (2b) aufweist, die aus ZnO oder ZnON oder SnOₓ oder Zinkstannat besteht, und
mit einer dielektrischen Oberschicht (4), die auf der von dem Substrat (1) abgewandten Seite der Metallschicht (3) angeordnet ist,
wobei die dielektrische Oberschicht (4) zumindest eine erste Lage (4a) und eine zweite Lage (4b) aufweist und
wobei eine Lage, die aus einem Nitrid oder Oxynitrid zumindest eines Elements der Gruppe aus Al, Si und Zr besteht, die das Schichtsystem auf der dem Substrat abgelegenen Seite abschließende zweite Lage (4b) ist,
wobei die erste Lage (2a) der dielektrischen Unterschicht (2) einen größeren Brechungsindex als die abschließende zweite Lage (4b) der dielektrischen Oberschicht (4) hat, und
wobei die zweite Lage (2b) der dielektrischen Unterschicht (2) und die erste Lage (4a) der dielektrischen Oberschicht (4) aus demselben Material erzeugt sind, so dass diese um die Metallschicht (3) angeordneten Lagen der dielektrischen Unterschicht (2) und Oberschicht (4) hinsichtlich ihres Brechungsindex symmetrisch ausgebildet sind.

2. Mit einer Wärmeschutzschicht beschichtetes Substrat nach Anspruch 1,
wobei die zweite Lage (2b) der Unterschicht (2), die aus ZnO oder ZnON oder SnOₓ oder Zinkstannat besteht, eine Dicke von 1 nm bis 15 nm, bevorzugt 2 nm bis 8 nm, weiter bevorzugt von 2,5 nm bis 5 nm, besonders bevorzugt von 3 nm aufweist.

3. Mit einer Wärmeschutzschicht beschichtetes Substrat nach Anspruch 1,
wobei die erste Lage (4a) der dielektrischen Oberschicht (4), die aus ZnO oder ZnON oder SnOₓ oder Zinkstannat besteht, eine Dicke von 10 nm bis 70 nm, bevorzugt von 20 nm bis 50 nm, weiter bevorzugt von 30 nm bis 40 nm, besonders bevorzugt von 35 nm aufweist.

4. Mit einer Wärmeschutzschicht beschichtetes Substrat nach einem der Ansprüche 1 bis 3,
wobei die zweite Lage (4b) der dielektrischen Oberschicht (4), die aus dem Nitrid oder Oxynitrid eines Elements der Gruppe aus Al, Si und Zr besteht, eine Dicke von 5 nm bis 70 nm, bevorzugt von 6 nm bis 30 nm, weiter bevorzugt von 6 nm bis 15 nm, besonders bevorzugt von 8 nm aufweist.

5. Mit einer Wärmeschutzschicht beschichtetes Substrat nach einem der Ansprüche 1 bis 4,
wobei die erste Lage (2a) der dielektrischen Unterschicht (2), die aus dem Oxid oder Nitrid eines Elements der Gruppe aus Bi, W, Ti besteht, eine Dicke von 10 nm bis 40 nm, bevorzugt von 15 nm bis 30 nm, weiter bevorzugt von 17 nm bis 25 nm, besonders bevorzugt von 20 nm aufweist.

6. Mit einer Wärmeschutzschicht beschichtetes Substrat nach einem der Ansprüche 1 bis 5,
wobei zwischen der Metallschicht (3) und der dielektrischen Oberschicht (4) eine Haftschicht (Primer) (5) aufgebracht ist.

7. Mit einer Wärmeschutzschicht beschichtetes Substrat nach Anspruch 6,
wobei die Haftschicht (5) als wesentlichen Bestandteil TiOₓ oder InSnOₓ oder NiCr oder keramisches ZnOₓ aufweist.

## Claims

1. Substrate coated with a thermal insulation layer
with a metal coating (3),
with a dielectric underlying coating (2) which is arranged between the metal coating (3) and the substrate(1), wherein the dielectric underlying coating (2) has a first layer (2a) which is applied to the substrate and which is composed of an oxide or nitride or oxy nitride of at least one element from the group consisting of Bi, W, Ti, and
wherein the dielectric underlying coating (2) has a second layer (2b) which is composed of ZnO or ZnON or SnOₓ or zinc stannate, and
with a dielectric overlying coating (4) which is arranged on the side of the metal coating (3) remote from the substrate (1),
wherein the dielectric overlying coating (4) has at least a first layer (4a) and a second layer (4b) and
wherein one layer which is composed of a nitride or oxy nitride of at least one element from the group consisting of Al, Si and Zr, is the second layer (4b) sealing the coating system on the side remote from the substrate,
wherein the first layer (2a) of the dielectric underlying coating (2) has a greater refractive index than the sealing second layer (4b) of the dielectric overlying coating (4), and
wherein the second layer (2b) of the dielectric underlying coating (2) and the first layer (4a) of the dielectric overlying coating (4) are produced from the same material so that these layers of the dielectric underlying coating (2) and overlying coating (4) arranged around the metal coating (3) are formed symmetrically with respect to their refractive index.

2. Substrate coated with a thermal insulation layer according to claim 1,
wherein the second layer (2b) of the underlying coating (2) which is composed of ZnO or ZnON or SnOₓ or zinc stannate, has a thickness of from 1 nm to 15 nm, preferably of from 2 nm to 8 nm, more preferably of from 2.5 nm to 5 nm, particularly preferably of 3 nm.

3. Substrate coated with a thermal insulation layer according to claim 1,
wherein the first layer (4a) of the dielectric overlying coating (4) which is composed of ZnO or ZnON or SnOₓ or zinc stannate, has a thickness of from 10 nm to 70 nm, preferably of from 20 nm to 50 nm, more preferably of from 30 nm to 40 nm, particularly preferably of 35 nm.

4. Substrate coated with a thermal insulation layer according to one of claims 1 to 3,
wherein the second layer (4b) of the dielectric overlying coating (4) which is composed of the nitride or oxy nitride of an element from the group consisting of Al, Si and Zr, has a thickness of from 5 nm to 70 nm, preferably of from 6 nm to 30 nm, more preferably of from 6 nm to 15 nm, particularly preferably of 8 nm.

5. Substrate coated with a thermal insulation layer according to one of claims 1 to 4,
wherein the first layer (2a) of the dielectric underlying coating (2) which is composed of the oxide or nitride of an element from the group consisting of Bi, W, Ti, has a thickness of from 10 nm to 40 nm, preferably of from 15 nm to 30 nm, more preferably of from 17 nm to 25 nm, particularly preferably of 20 nm.

6. Substrate coated with a thermal insulation layer according to one of claims 1 to 5,
wherein a primer (5) is applied between the metal coating (3) and the dielectric overlying coating (4).

7. Substrate coated with a thermal insulation layer according to claim 6,
wherein the primer (5) has TiOₓ or or NiCr or ceramic ZnOₓ as an essential component.

## Revendications

1. Substrat revêtu d'une couche d'isolation thermique avec une couche métallique (3),
avec une couche inférieure diélectrique (2), qui est disposée entre la couche métallique (3) et le substrat (1), où la couche inférieure diélectrique (2) présente une première strate (2a) qui est appliquée sur le substrat et qui consiste en un oxyde ou nitrure ou oxynitrure d'au moins un élément du groupe de Bi, W, Ti, et
où la couche inférieure diélectrique (2) présente une seconde strate (2b) qui consiste en ZnO ou ZnON ou SnOₓ ou stannate de zinc, et
avec une couche supérieure diélectrique (4) qui est disposée sur le côté de la couche métallique (3) écarté du substrat (1),
où la couche supérieure diélectrique (4) présente au moins une première strate (4a) et une seconde strate (4b) et
où une strate, qui consiste en un nitrure ou oxynitrure d'au moins un élément du groupe de Al, Si et Zr, est la seconde strate (4b) terminant le système de couches sur le côté opposé au substrat,
où la première strate (2a) de la couche inférieure diélectrique (2) a un plus grand indice de réfraction que la seconde strate de terminaison (4b) de la couche supérieure diélectrique (4),
et
où la seconde strate (2b) de la couche inférieure diélectrique (2) et la première strate (4a) de la couche supérieure diélectrique (4) sont fabriquées en le même matériau, de sorte que ces strates de la couche inférieure diélectrique (2) et de la couche supérieure diélectrique (4) qui sont disposées autour de la couche métallique (3) sont formées de manière symétrique en ce qui concerne leur indice de réfraction.

2. Substrat revêtu d'une couche d'isolation thermique selon la revendication 1,
où la seconde strate (2b) de la couche inférieure (2), qui consiste en ZnO ou ZnON ou SnOₓ ou stannate de zinc, présente une épaisseur de 1 nm à 15 nm, de préférence de 2 nm à 8 nm, de préférence encore de 2,5 nm à 5 nm, de manière particulièrement préférée de 3 nm.

3. Substrat revêtu d'une couche d'isolation thermique selon la revendication 1,
où la première strate (4a) de la couche supérieure diélectrique (4), qui consiste en ZnO ou ZnON ou SnOₓ ou stannate de zinc, présente une épaisseur de 10 nm à 70 nm, de préférence de 20 nm à 50 nm, de préférence encore de 30 nm à 40 nm, de manière particulièrement préférée de 35 nm.

4. Substrat revêtu d'une couche d'isolation thermique selon l'une des revendications 1 à 3,
où la seconde strate (4b) de la couche supérieure diélectrique (4), qui consiste en le nitrure ou oxynitrure d'un élément du groupe de Al, Si et Zr, présente une épaisseur de 5 nm à 70 nm, de préférence de 6 nm à 30 nm, de préférence encore de 6 nm à 15 nm, de manière particulièrement préférée de 8 nm.

5. Substrat revêtu d'une couche d'isolation thermique selon l'une des revendications 1 à 4,
où la première strate (2a) de la couche inférieure diélectrique (2), qui consiste en l'oxyde ou nitrure d'un élément du groupe de Bi, W, Ti, présente une épaisseur de 10 nm à 40 nm, de préférence de 15 nm à 30 nm, de préférence encore de 17 nm à 25 nm, de manière particulièrement préférée de 20 nm.

6. Substrat revêtu d'une couche d'isolation thermique selon l'une des revendications 1 à 5,
où une couche adhésive (couche de fond) (5) est appliquée entre la couche métallique (3) et la couche supérieure diélectrique (4).

7. Substrat revêtu d'une couche d'isolation thermique selon la revendication 6,
où la couche adhésive (5) présente comme constituant essentiel TiOₓ ou InSnOₓ ou NiCr ou ZnOₓ céramique.
